# EUROPÄISCHE PATENTSCHRIFT

(11) **EP 3 016 858 B1**
(45) Veröffentlichungstag und Bekanntmachung des Hinweises auf die Patenterteilung: **05.04.2017**
(21) Anmeldenummer: 14747806.9
(22) Anmeldetag: 07.07.2014
(51) Int. Cl.: B64C 27/72

(54) **ROTOR EINES LUFTFAHRZEUGES MIT EINEM SCHRAUBENLINIENFÖRMIGEN AKTUATOR**
ROTOR FOR AN AIRCRAFT HAVING A HELICAL ACTUATOR
ROTOR D'AÉRONEF COMPRENANT UN ACTIONNEUR DE FORME HÉLICOÏDALE

(30) Priorität: 05.07.2013 DE 102013011259
(43) Veröffentlichungstag der Anmeldung: 11.05.2016
(73) Patentinhaber: Airbus Defence and Space GmbH, 85521 Ottobrunn (DE)
(72) Erfinder: HASLACH, Horst, 82538 Geretsried (DE)
(74) Vertreter: Kopf Westenberger Wachenhausen Patentanwälte PartG mbB
(86) Internationale Anmeldenummer: PCT/DE2014/000338
(87) Internationale Veröffentlichungsnummer: WO 2015/000461

(56) Entgegenhaltungen:
- DE-A1- 19 813 959
- DE-A1-102008 036 760
- DE-A1-102010 042 223
- US-A1- 2004 017 129

## Beschreibung

### Technisches Gebiet

Die vorliegende Erfindung betrifft einen Rotor für ein Luftfahrzeug sowie einen Helikopter.

### Technischer Hintergrund

Rotorblätter eines Helikopters bzw. Hubschraubers können mittels eines elastischen Blatthalses starr an einem Rotormast befestigt sein. Der elastische Blatthals kann definierte Bewegungen in Schlag-, Schwenk- und Drehrichtung zulassen. Üblicherweise ist über dem elastischen Blatthals eine Hülse angebracht, die auf der Außenseite fest mit dem Blattprofil verbunden ist. Auf der Innenseite, nahe am Rotormast, ist ferner eine Steuerstange angeordnet, deren Bewegungen zu einer Drehung der Hülse führen und zu einer Veränderung des Blattprofils damit. Die Steuerbewegungen der Steuerstange können durch ein Mischgetriebe und eine Taumelscheibe erzeugt werden.

Die deutsche Patentschrift DE 197 45 330 C1 betrifft einen Rotorblattanschluss mit einem das Rotorblatt mit der Rotornabe verbindenden Tragholm, wobei der Tragholm einen offenen Wölbquerschnitt besitzt sowie am Tragholm befestigte, piezoelektrische Festkörperelemente aufweist.

Die DE 10 2008 036 760 A1 betrifft einen Drehaktuator, der mindestens eine streifenförmig ausgebildete, reversibel verbiegbare passive Trägerschicht umfasst. Die Trägerschicht weist in Trägerschicht-Längsrichtung einen auf die Trägerschicht aufgebrachten aktiven Aktuatorbelag auf, der bei einer Aktivierung in Trägerschicht-Längsrichtung expandier- und/oder zusammenziehbar ist.

Die US 2004/0017129 A1 betrifft elektroaktive Vorrichtungen, welche eine sich entlang einer Nebenachse ersteckende elektroaktive Struktur umfassen, die sich um eine Hauptachse krümmt. Diese elektroaktive Struktur weist elektroaktive Teile auf, die sich um die Nebenachse erstrecken.

In der DE 10 2010 042 223 A1 ist eine Drehmomenterzeugungsvorrichtung beschrieben, die ein Drehmoment erzeugendes Element umfasst, welches im Wesentlichen spiralförmig und/oder schraubenförmig um eine Drehachse des zu erzeugenden Drehmoments angeordnet ist und mindestens ein Piezo-Element zur Erzeugung des Drehmoments aufweist.

### Zusammenfassung der Erfindung

Es ist Aufgabe der Erfindung, eine leichte und wartungsarme Vorrichtung zur Steuerung eines Rotorblatts eines Luftfahrzeugs bereitzustellen.
Die Aufgabe wird durch die Gegenstände der unabhängigen Ansprüche gelöst. Weiterbildungen und Ausführungsformen der Erfindung sind den Unteransprüchen sowie der nachfolgenden Beschreibung zu entnehmen.

Die Erfindung betrifft einen schraubenlinienförmigen Aktuator zur Steuerung eines Rotorblatts eines Luftfahrzeugs. Der Aktuator weist eine Mehrzahl von Piezoelementen auf, die seriell angeordnet sind, um bei Anlegen einer Steuerspannung an die Piezoelemente eine Verstellung des Rotorblatts zu bewirken.

Beim schraubenlinienförmigen Aktuator handelt es sich um einen Aktuator in der Form einer Schraubenlinie. Eine Schraubenlinie kann durch eine Kurve beschrieben werden, die sich mit einer konstanten Steigung um den Mantel eines Zylinders windet und wird unter anderem auch als Helix bezeichnet.

Beim Luftfahrzeug kann es sich um einen Helikopter, ein Flugzeug oder einen Zeppelin handeln.

Weiterhin können mit dem schraubenlinienförmigen Aktuator auch Propeller von Luftfahrzeugen gesteuert werden.

Unter Piezoelementen werden Bauteile verstanden, welche durch Anlegen einer elektrischen Spannung eine mechanische Bewegung, insbesondere eine Ausdehnung oder eine Kontraktion, ausführen. Beispielsweise sind diese Piezoelemente Piezokristalle oder piezoelektrische Keramiken.

Eine serielle Anordnung von Piezoelementen bezeichnet beispielsweise eine gestapelte Anordnung der Piezoelemente, bei der die Piezoelemente übereinander seriell angeordnet sind. Mit anderen Worten bezeichnet eine "serielle Anordnung" eine geschichtete Anordnung von Piezoelementen. Zwischen den einzelnen Piezoelementen sind beispielsweise Elektroden angeordnet. Das heißt, dass jeweils zwischen zwei benachbarten Piezoelemente eine Elektrode angeordnet ist. Um den Aktuator zu betätigen wird zwischen zwei benachbarten Elektroden jeweils eine Spannung angelegt.

Zum Beispiel weist der Aktuator eine Kaskadierung von Piezoelementen auf, indem mehrere dünne Piezoelemente mit dazwischenliegenden Elektroden zusammengefügt werden. Dadurch ergibt sich eine mechanische Reihenanordnung mit Ansteuerung durch eine elektrische Parallelschaltung. Dazu kann folgendes Schema angewandt werden: Zuerst werden abwechslungsweise eine Elektrode (z.B. eine Kathode), ein Piezoelement, danach wieder eine Elektrode (z.B. eine Anode) und schlussendlich eine weiteres Piezoelement mit einer geänderte Polarisierungsrichtung übereinander angeordnet. Diese Anordnung kann vielfach wiederholt werden.

Ein Vorteil einer seriellen, gestapelten bzw. geschichteten Anordnung ist, dass sich die mechanischen Ausdehnungen der einzelnen Piezoelemente addieren. Das heißt, die Gesamtausdehnung des Aktuators kann in etwa der Ausdehnung eines einzelnen Piezoelements multipliziert mit der Anzahl der Piezoelemente betragen. So kann eine Ausdehnung des Aktuators erreicht werden, die groß genug ist, um eine Verstellung des Rotorblatts zu bewirken.

Ein Vorteil eines schraubenlinienförmigen Aktuators zur Steuerung eines Rotorblatts eines Luftfahrzeugs kann darin gesehen werden, dass ein Großteil der mechanischen Steueranlage, zum Beispiel das Mischgetriebe oder die Taumelscheibe, nicht erforderlich ist. Weiterhin kann ein Aktuator aus Piezoelementen sehr leise betrieben werden, so dass eine Verringerung der Geräuschemission durch das umlaufende Rotorblatt erreicht werden kann. Ferner ist durch den schraubenlinienförmigen Aktuator aus Piezoelementen eine hochdynamische Steuerung eines Rotorblatts möglich. Die Rotorblattansteuerung mittels eines elektrisch betriebenen Aktuators aus Piezoelementen weist insgesamt wenig Bauteile auf und kann kostengünstig hergestellt werden.

Gemäß einer Ausführungsform der Erfindung weisen Piezoelemente jeweils eine Ausdehnungsrichtung auf, welche parallel zu einer Schraubenlinienrichtung des Aktuators angeordnet ist.

Die Ausdehnungsrichtung entspricht beispielsweise der Richtung, in welche sich die Piezoelemente bei Anlegen der Steuerspannung ausdehnen. Das heißt, dass sich die Piezoelemente des Aktuators bei Anlegen der Steuerspannung in Schraubenlinienrichtung ausdehnen. Beispielsweise ist die Ausdehnungsrichtung der Piezoelemente eine Dickenrichtung. Das heißt, dass die Dickenrichtung der Piezoelemente parallel zur Schraubenlinienrichtung ist.

Dabei bezeichnet die Schraubenlinienrichtung die Richtung des schraubenlinienförmigen Aktuators, das heißt die Richtung der Schraubenlinie, entlang welcher der Aktuator angeordnet ist. Mit anderen Worten bezeichnet die Schraubenlinienrichtung an jedem Punkt der Schraubenlinie eine Richtung, welche tangential zur Schraubenline ist.

Da die Ausdehnungsrichtung der Piezoelemente im Wesentlichen parallel zur Schraubenlinienrichtung sein kann, ist in diesem Fall auch die Ausdehnung des gesamten schraubenlinienförmigen Aktuators auch in Schraubenlinienrichtung. Somit kann mit dem Aktuator eine Bewegung des Rotorblatts im Wesentlichen in Schraubenlinienrichtung erzeugt werden. Das heißt, dass ein Rotorblatt, an welches ein schraubenlinienförmiger Aktuator angeschlossen ist, um eine Mittelachse des Aktuators, um welche sich der Aktuator windet, rotiert werden kann.

Gemäß einer weiteren Ausführungsform der Erfindung windet sich der Aktuator um ein Raumvolumen entlang einer Mittelachse des Aktuators.

Dabei bezeichnet die Mittelachse eine Achse in Längsrichtung des schraubenlinienförmigen Aktuators. Mit anderen Worten windet sich der schraubenlinienförmige Aktuator um seine Mittelachse.

In diesem Raumvolumen kann sich beispielsweise ein elastischer Rotorblatthals eines Rotors befinden. Das heißt, dass sich im Raumvolumen des schraubenlinienförmigen Aktuators ein anderes Element, z.B. ein Rotorblatthals, befinden kann.

Gemäß einer weiteren Ausführungsform der Erfindung weist der Aktuator mindestens 100 Piezoelemente auf.

Zum Beispiel weist der Aktuator Piezoelemente auf, welche in Schraubenlinienrichtung jeweils eine Dicke von 0,2 mm bis 1,0 mm aufweisen. Mit anderen Worten beinhaltet der Aktuator gestapelte Plättchen oder Scheiben aus Piezoelementen, die senkrecht zur Schraubenlinienrichtung angeordnet sind, d.h. dass die Ebene, welche das jeweilige Plättchen definiert, senkrecht zur Schraubenlinienrichtung angeordnet ist. Die Ausdehnung der Piezoelemente findet jeweils in Dickenrichtung der Piezoelemente statt.

Gemäß einer weiteren Ausführungsform der Erfindung sind die Piezoelemente von einem Faserverbundmaterial umgeben. Zum Beispiel kann es sich dabei um eine Matrix aus einem Faserverbundgewebe handeln.
Dabei definiert das die Piezoelemente umgebende Faserverbundmaterial die Schraubenlinienform des Aktuators. Ferner ist das Faserverbundmaterial flexibel, so dass sich die Piezoelemente ausdehnen können und sich der Aktuator insgesamt auch ausdehnen kann. Weiterhin können im Faserverbundmaterial Drähte oder andere elektrische Leitung zum Anlegen der Steuerspannung an die Piezoelemente verbaut sein.

Gemäß einer weiteren Ausführungsform der Erfindung weist der Aktuator mindestens drei Windungen auf.

Gemäß einer weiteren Ausführungsform der Erfindung bewirkt ein Anlegen der Steuerspannung an die Piezoelemente eine Ausdehnung des Aktuators in einer Schraubenlinienrichtung des Aktuators.

Die Erfindung betrifft außerdem einen Rotor für ein Luftfahrzeug, welcher zumindest ein Rotorblatt aufweist. Weiterhin weist der Rotor einen Rotorblattanschluss auf, welcher dazu ausgeführt ist, das Rotorblatt an den Rotormast anzuschließen. Ferner beinhaltet der Rotor einen elastischen Blatthals, welcher das Rotorblatt mit dem Rotorblattanschluss verbindet und eine Drehbewegung des Rotorblatts um eine Drehachse in Längsrichtung des Rotorblatts zulässt. Weiterhin weist der Rotor einen oben und im Folgenden beschriebenen, schraubenlinienförmigen Aktuator auf, welcher um den Blatthals gewunden angeordnet ist.

Insgesamt kann es sich beim Rotor auch um einen Propeller handeln.

Zum Beispiel weist der Rotor einen Rotormast und vier Rotorblätter auf, welche jeweils an den Rotormast angeschlossen sind.

Der Rotorblattanschluss kann ein Bauteil sein, an welches das Rotorblatt über den Rotorblatthals angeschlossen ist. Alternativ kann der Rotorblattanschluss auch ein Ende eines Rotorblatts bezeichnen, welches das Rotorblatt mit dem Rotormast verbindet bzw. an welchem das Rotorblatt an den Rotormast angeschlossen werden kann. Der Rotorblattanschluss ist beispielsweise durch Schrauben oder Bolzen mit dem Rotormast verbunden. Der Rotorblatthals wiederum kann ein Bauteil sein, welches zwischen Rotorblattanschluss und Rotorblatt angeordnet ist, so dass der Rotorblatthals das Rotorblatt mit dem Rotorblattanschluss verbindet. Rotorblatt, Rotorblatthals und Rotorblattanschluss können auch verschiedene Bereiche eines einteiligen Bauteils sein.

Dabei lässt der Rotorblatthals eine Bewegung in Drehrichtung um eine Drehachse des Rotorblatts zu. Die Drehachse des Rotorblatts bezeichnet eine Achse des Rotorblatts, welche in der Längsrichtung des Rotorblatts verläuft. Mit anderen Worten weist das Rotorblatt in Richtung der Drehachse die größte Ausdehnung auf. Beispielsweise kann die Drehachse des Rotorblatts im Wesentlichen senkrecht zu einer Rotationsachse des Rotormastes sein. Eine Drehbewegung des Rotorblatts kann auch als eine Rotationsbewegung des Rotorblatts um die Drehachse des Rotorblatts bezeichnet werden.

Mithilfe des schraubenlinienförmigen Aktuators kann eine solche Drehbewegung des Rotorblatts um die Drehachse des Rotorblatts bewirkt werden. Somit kann mit diesem Aktuator Auftrieb und/oder Vortrieb des Rotors gesteuert werden. Gemäß der Erfindung ist der schraubenlinienförmige Aktuator mit einem ersten Ende am Rotormast und mit einem zweiten Ende am Rotorblatt befestigt.

Mit anderen Worten ist der Aktuator fest mit dem Rotormast sowie dem Rotorblatt verbunden, so dass eine Kraft des Aktuators auf den Rotormast und/oder auf das Rotorblatt weitergeleitet wird. Beispielsweise stößt sich durch diese Verbindung der Aktuator vom Rotormast ab und überträgt seine Ausdehnung auf das Rotorblatt, so dass eine Drehbewegung des Rotorblatts bewirkt wird.

Gemäß einer weiteren Ausführungsform der Erfindung ist der schraubenlinienförmige Aktuator mit einem Abstand zur Drehachse des Rotorblatts, die in der Längsrichtung des Rotors verläuft, am Rotorblatt befestigt.

Durch diesen Abstand der Befestigung des Aktuators am Rotorblatt zur Drehachse des Rotorblatts hat der Aktuator einen Hebel zum Erzeugen einer Drehbewegung des Rotorblatts um seine Drehachse. Dieser Hebel entspricht dem Abstand zwischen dem Punkt der Befestigung des Aktuators am Rotorblatt und der Drehachse des Rotorblatts.

Gemäß einer weiteren Ausführungsform der Erfindung umläuft der schraubenlinienförmige Aktuator den Blatthals mindestens dreimal.

Gemäß einer weiteren Ausführungsform der Erfindung bewirkt ein Anlegen der Steuerspannung auf den schraubenlinienförmigen Aktuator eine Drehbewegung des Rotorblatts.

Die Erfindung betrifft außerdem einen Helikopter mit mindestens einem wie oben und im Folgenden beschriebenen Rotor.

Beispielsweise handelt es sich um einen elektrisch angetriebenen Helikopter, der Elektromotoren zum Antrieb eines oder mehrerer Rotoren aufweist. Beim Helikopter kann es sich auch um einen kraftstoffbetriebenen Helikopter handeln, dessen Rotorblätter mit schraubenlinienförmigen Aktuatoren angesteuert werden. Weiterhin kann es sich beim Helikopter auch um einen Modellhubschrauber oder um Drohnen handeln.

Weitere Merkmale, Vorteile und Anwendungsmöglichkeiten der Erfindung ergeben sich aus der nachfolgenden Beschreibung der Ausführungsbeispiele und Figuren. Dabei bilden alle beschriebenen und/oder bildlich dargestellten Merkmale für sich und in beliebiger Kombination den Gegenstand der Erfindung auch unabhängig von ihrer Zusammensetzung in den einzelnen Ansprüchen oder deren Rückbezügen.

### Kurze Beschreibung der Figuren

Fig. 1 zeigt einen schraubenlinienförmigen Aktuator gemäß einem Ausführungsbeispiel der Erfindung.
Fig. 2 zeigt einen Rotor mit einem schraubenlinienförmigen Aktuator gemäß einem Ausführungsbeispiel der Erfindung.
Fig. 3 zeigt einen Helikopter gemäß einem Ausführungsbeispiel der Erfindung.

Die Figuren sind schematisch und nicht maßstabsgetreu. Sind in der nachfolgenden Beschreibung in verschiedenen Figuren die gleichen Bezugszeichen angegeben, so bezeichnen diese gleiche oder ähnliche Elemente. Gleiche oder ähnliche Elemente können aber auch mit unterschiedlichen Bezugszeichen bezeichnet sein.

Detaillierte Beschreibung von Ausführungsbeispielen

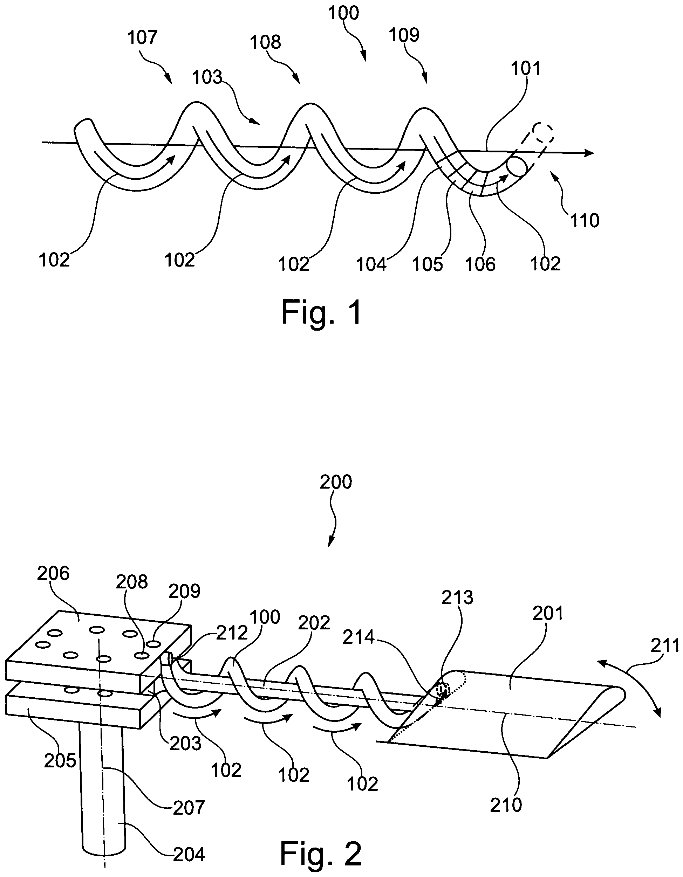

In Fig. 1 ist ein schraubenlinienförmiger Aktuator 100 gemäß einem Ausführungsbeispiel der Erfindung gezeigt. Der schraubenlinienförmige Aktuator 100 beschreibt die Form einer Schraubenlinie bzw. einer Helix, welche um eine Mittelachse 101 angeordnet ist. Gleichzeitig definiert die Mittelachse 101 auch die Längsrichtung 101 des schraubenlinienförmigen Aktuators 100. Weiterhin definiert der schraubenlinienförmige Aktuator eine Schraubenlinienrichtung 102, welche in Richtung der Schraubenlinie zeigt, entlang welcher der Aktuator 100 angeordnet ist. Weiterhin befindet sich innerhalb des Aktuators 100, entlang der Mittelachse 101 des Aktuators ein Raumvolumen 103, um welchen sich der Aktuator 100 windet.

Der schraubenlinienförmige Aktuator weist mehrere Piezoelemente auf, welche seriell, das heißt übereinander, angeordnet sind. Beispielsweise sind drei übereinander angeordnete Piezoelemente 104, 105 und 106 gezeigt.

Im vorliegenden Ausführungsbeispiel weist der schraubenlinienförmige Aktuator drei ganze Windungen 107, 108 und 109 sowie eine an die Windung 109 anschließende, halbe Windung auf.

Ein Anlegen einer Steuerspannung auf die Piezoelemente 104, 105 und 106 bewirkt eine Ausdehnung der einzelnen Piezoelemente 104, 105 und 106 in Schraubenlinienrichtung 102. Insgesamt führt dies zu einer Ausdehnung 110 des Aktuators 100 in Schraubenlinienrichtung 102, welche beispielsweise die Ausdehnung eines einzelnen Piezoelements multipliziert mit der Zahl der Piezoelemente beträgt. In Fig. 1 ist die Ausdehnung 110 des Aktuators mit einer gestrichelten Linie dargestellt.

Wenn die Steuerspannung an den Aktuator 100 angelegt wird, dehnt sich der Aktuator aus, so dass er die Form aufweist, welche die durchgezogene Linie sowie die gestrichelt dargestellte Ausdehnung 110 beinhaltet. Ohne Steuerspannung hat der Aktuator 100 die Form, welche mit der durchgezogenen Linie dargestellt ist.

In Fig. 2 ist ein Rotor 200 gemäß einem Ausführungsbeispiel der Erfindung gezeigt. Der Rotor kann einen Rotormast 204 aufweisen, an welchem ein Rotorblatt 201 angeschlossen ist. Dabei verbindet ein Rotorblatthals 202 das Rotorblatt 201 mit einem Rotorblattanschluss 203, der am Rotormast 204 angeschlossen ist. Im vorliegenden Ausführungsbeispiel ist der Rotorblattanschluss ein Ende des Rotorblatthalses 202 und ist zwischen einer unteren Befestigungsplatte 205 und einer oberen Befestigungsplatte 206 eingeklemmt. Weiterhin ist der Rotorblattanschluss 203 mit Bolzen 208 und 209 mit der unteren Befestigungsplatte 205 und der oberen Befestigungsplatte 206 verbunden.

Am Rotormast 204 können neben dem Rotorblatt 201 drei weitere Rotorblätter angebracht werden, welche jedoch nicht dargestellt sind.

Um den Rotorblatthals 202 ist ein schraubenlinienförmiger Aktuator 100 angeordnet, welcher sich um den Rotormast 204 windet. Weiterhin ist der Aktuator 100 am Rotormast 204 befestigt. Im vorliegenden Ausführungsbeispiel ist der Aktuator mithilfe eines Befestigungselements 212 mit der oberen Befestigungsplatte 206 befestigt. Ferner ist der Aktuator 100 mit einem Befestigungselement 213 mit dem Rotorblatt 201 befestigt. Das Rotorblatt weist eine Drehachse 210 auf, welche in der Längsrichtung des Rotorblatts verläuft. Der schraubenlinienförmige Aktuator 100 ist mit einem Abstand 214 zu dieser Drehachse 210 des Rotorblatts 201 angeordnet, so dass der schraubenlinienförmige Aktuator eine Hebelkraft auf das Rotorblatt 201 bezüglich der Drehachse 210 ausüben kann.

In Fig. 2 sind verschiedene Achsen und Richtungen gezeigt. Der Rotormast weist eine Rotationsachse 207 auf, um welche der Rotormast rotiert. Ferner weist das Rotorblatt eine wie oben beschriebene Drehachse auf 210, welche in Längsrichtung des Rotorblatts verläuft. Die Rotationsachse des Rotormastes 207 sowie die Drehachse 210 des Rotorblatts 201 sind im Wesentlichen senkrecht zueinander angeordnet. Weiterhin ist in diesem Ausführungsbeispiel die Schraubenlinienrichtung 102 des Aktuators gezeigt, welche entlang einer Schraubenlinie verläuft, entlang welcher der Aktuator angeordnet ist. Ferner ist eine Drehrichtung 211 gezeigt, welche das Rotorblatt 201 ausüben kann. Die Drehrichtung bzw. Drehbewegung 211 entspricht im Wesentlichen einer Drehbewegung und/oder einer Rotationsbewegung um die Drehachse 210 des Rotorblatts 201. Durch Anlegen der Steuerspannung auf die Piezoelemente 104, 105 und 106 des Aktuators 100 wird eine Drehbewegung 211 des Rotorblatts 201 bewirkt.

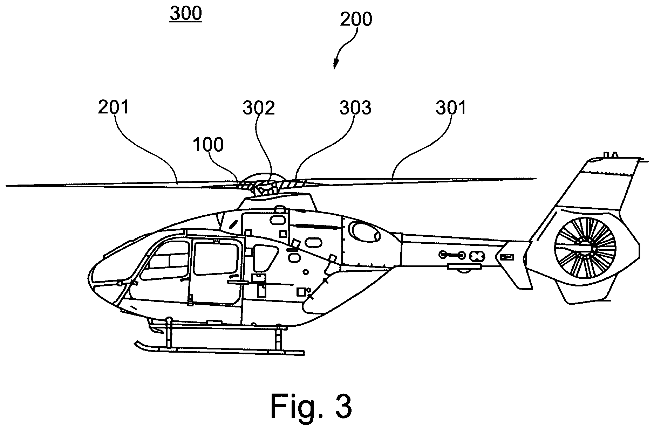

In Fig. 3 ist ein Helikopter gemäß einem Ausführungsbeispiel der Erfindung dargestellt. Der Helikopter 300 weist einen Rotor 200, in diesem Fall einen Hauptrotor, auf. Der Rotor 200 weist beispielsweise vier Rotorblätter auf, wobei im vorliegenden Ausführungsbeispiel die drei Rotorblätter 201, 301 und 302 sichtbar sind. Das Rotorblatt 201 kann durch einen schraubenlinienförmigen Aktuator 100 und das Rotorblatt 301 durch einen schraubenlinienförmigen Aktuator 303 gesteuert werden. Auch die weiteren Rotorblätter können durch schraubenlinienförmige Aktuatoren gesteuert werden.

Ergänzend sei darauf hingewiesen, dass "umfassend" oder "aufweisend" keine anderen Elemente ausschließt und "ein" oder "einer" keine Vielzahl ausschließt. Ferner sei darauf hingewiesen, dass Merkmale, die mit Verweis auf eines der obigen Ausführungsbeispiele oder Ausführungsformen beschrieben worden sind, auch in Kombination mit anderen Merkmalen anderer oben beschriebener Ausführungsbeispiele oder Ausführungsformen verwendet werden können. Bezugszeichen in den Ansprüchen sind nicht als Einschränkungen anzusehen.

## Patentansprüche

1. Rotor (200) für ein Luftfahrzeug (300), aufweisend:
ein Rotorblatt (201);
einen Rotorblattanschluss (203), welcher dazu ausgeführt ist, das Rotorblatt an einen Rotormast (204, 205, 206) anzuschließen;
einen elastischen Blatthals (202), welcher das Rotorblatt (201) mit dem Rotorblattanschluss (203) verbindet und eine Drehbewegung (211) des Rotorblatts um eine Drehachse (210) in Längsrichtung des Rotorblatts (201) zulässt;
einen schraubenlinienförmigen Aktuator (100) zur Steuerung des Rotorblatts (201) des Luftfahrzeugs (300);
wobei der schraubenförmige Aktuator um den elastischen Blatthals (202) gewunden angeordnet ist;
wobei der schraubenlinienförmige Aktuator mit einem ersten Ende am Rotormast (204, 205, 206) und einem zweiten Ende am Rotorblatt (201) befestigt ist; und
wobei der Aktuator eine Mehrzahl von Piezoelementen (104, 105, 106) aufweist, die seriell angeordnet sind, um bei Anlegen einer Steuerspannung an die Piezoelemente eine Verstellung des Rotorblatts zu bewirken.

2. Rotor nach Anspruch 1, wobei die Piezoelemente jeweils eine Ausdehnungsrichtung aufweisen, welche parallel zu einer Schraubenlinienrichtung (102) des Aktuators angeordnet ist.

3. Rotor nach einem der vorangehenden Ansprüche, wobei sich der Aktuator um ein Raumvolumen (103) entlang einer Mittelachse (101) des Aktuators windet.

4. Rotor nach einem der vorangehenden Ansprüche, wobei der Aktuator mindestens 100 Piezoelemente (104, 105, 106) aufweist.

5. Rotor nach einem der vorangehenden Ansprüche, wobei die Piezoelemente von einem Faserverbundmaterial umgeben sind.

6. Rotor nach einem der vorangehenden Ansprüche, wobei der Aktuator mindestens drei Windungen (107, 108, 109) aufweist.

7. Rotor nach einem der vorangehenden Ansprüche, wobei ein Anlegen der Steuerspannung an die Piezoelemente eine Ausdehnung (110) des Aktuators in einer Schraubenlinienrichtung (102) des Aktuators bewirkt.

8. Rotor nach einem der vorangehenden Ansprüche, wobei der schraubenlinienförmige Aktuator mit einem Abstand (214) zur Drehachse (210) des Rotorblatts (201), die in der Längsrichtung des Rotorblatts (201) verläuft, am Rotorblatt (201) befestigt ist.

9. Rotor nach einem der vorangehenden Ansprüche, wobei der schraubenlinienförmige Aktuator den Blatthals mindestens dreimal umläuft.

10. Rotor nach einem der vorangehenden Ansprüche, wobei ein Anlegen der Steuerspannung an den schraubenlinienförmigen Aktuator eine Drehbewegung (211) des Rotorblatts (201) bewirkt.

11. Helikopter (300) mit mindestens einem Rotor (200, 301, 302) nach einem der vorangehenden Ansprüche.

## Claims

1. Rotor (200) for an aircraft (300), said rotor comprising:
a rotor blade (201),
a rotor blade connection (203) that is designed so as to connect the rotor blade to a rotor mast (204, 205, 206),
a resilient blade neck (202) that connects the rotor blade (201) to the rotor blade connection (203) and renders possible a rotational movement (211) of the rotor blade about an axis of rotation (210) in the longitudinal direction of the rotor blade (201),
a helical actuator (100) for controlling the rotor blade (201) of the aircraft (300),
wherein the helical actuator is wound around the resilient blade neck (202),
wherein the helical actuator is fastened by a first end to the rotor mast (204, 205, 206) and by a second end to the rotor blade (201), and
wherein the actuator comprises a plurality of piezo elements (104, 105, 106) that are arranged in series in order to adjust the rotor blade when a control voltage is applied to the piezo elements.

2. Rotor according to Claim 1, wherein the piezo elements comprise in each case an expansion direction that is parallel to a helical direction (102) of the actuator.

3. Rotor according to any one of the preceding claims, wherein the actuator winds around a volume of space (103) along a central axis (101) of the actuator.

4. Rotor according to any one of the preceding claims, wherein the actuator comprises at least 100 piezo elements (104, 105, 106).

5. Rotor according to any one of the preceding claims, wherein the piezo elements are surrounded by a fibre composite material.

6. Rotor according to any one of the preceding claims, wherein the actuator comprises at least three turns (107, 108, 109).

7. Rotor according to any one of the preceding claims, wherein an expansion (110) of the actuator occurs in a helical direction (102) of the actuator when the control voltage is applied to the piezo elements.

8. Rotor according to any one of the preceding claims, wherein the helical actuator is fastened to the rotor blade (201) at a distance (214) from the axis of rotation (210) of the rotor blade (201), said axis extending in the longitudinal direction of the rotor blade (201).

9. Rotor according to any one of the preceding claims, wherein the helical actuator circulates the blade neck at least three times.

10. Rotor according to any one of the preceding claims, wherein applying the control voltage to the helical actuator produces a rotational movement (211) of the rotor blade (201).

11. Helicopter (300) having at least one rotor (200, 301, 302) according to any one of the preceding claims.

## Revendications

1. Rotor (200) pour un aéronef (300), présentant :
une pale de rotor (201) ;
un raccord (203) de pale de rotor qui est réalisé pour raccorder la pale de rotor à un mât de rotor (204, 205, 206) ;
un col de pale (202) élastique, lequel relie la pale de rotor (201) au raccord (203) de pale de rotor et permet un mouvement rotatif (211) de la pale de rotor autour d'un axe de rotation (210) dans le sens longitudinal de la pale de rotor (201) ;
un actionneur (100) hélicoïdal destiné à commander la pale de rotor (201) de l'aéronef (300) ;
dans lequel rotor l'actionneur hélicoïdal est disposé en étant enroulé autour du col de pale (202) élastique ;
dans lequel rotor l'actionneur hélicoïdal est fixé au mât de rotor (204, 205, 206) avec une première extrémité et est fixé à la pale de rotor (201) avec une deuxième extrémité ; et
dans lequel rotor l'actionneur présente une pluralité d'éléments piézoélectriques (104, 105, 106) qui sont disposés en série afin de provoquer un ajustage de la pale de rotor lorsqu'une tension de commande est appliquée sur les éléments piézoélectriques.

2. Rotor selon la revendication 1, dans lequel les éléments piézoélectriques présentent respectivement une direction de dilatation disposée parallèlement à une direction hélicoïdale 102) de l'actionneur.

3. Rotor selon l'une quelconque des revendications précédentes, dans lequel l'actionneur s'enroule autour d'un volume spatial (103) le long d'un axe médian (101) de l'actionneur.

4. Rotor selon l'une quelconque des revendications précédentes, dans lequel l'actionneur présente au moins 100 éléments piézoélectriques (104, 105, 106).

5. Rotor selon l'une quelconque des revendications précédentes, dans lequel les éléments piézoélectriques sont entourés par une matière composite en fibres.

6. Rotor selon l'une quelconque des revendications précédentes, dans lequel l'actionneur présente au moins trois enroulements (107, 108, 109).

7. Rotor selon l'une quelconque des revendications précédentes, dans lequel une application de la tension de commande sur les éléments piézoélectriques provoque une dilatation (110) de l'actionneur dans une direction hélicoïdale (102) de l'actionneur.

8. Rotor selon l'une quelconque des revendications précédentes, dans lequel l'actionneur hélicoïdal est fixé sur la pale de rotor (201) avec un écart (214) par rapport à l'axe de rotation (210) de la pale de rotor (201), lequel s'étend dans le sens longitudinal de la pale de rotor (201).

9. Rotor selon l'une quelconque des revendications précédentes, dans lequel l'actionneur hélicoïdal entoure le col de pale au moins trois fois.

10. Rotor selon l'une quelconque des revendications précédentes, dans lequel une application de la tension de commande sur l'actionneur hélicoïdal provoque un mouvement rotatif (211) de la pale de rotor (201).

11. Hélicoptère (300) comportant au moins un rotor (200, 301, 302) selon l'une quelconque des revendications précédentes.
